# EUROPEAN PATENT SPECIFICATION

(11) **EP 3 415 757 B1**
(45) Date of publication and mention of the grant of the patent: **28.04.2021**
(21) Application number: 18177026.4
(22) Date of filing: 11.06.2018
(51) Int. Cl.: F04B 39/10, F16K 15/10, F16K 15/12

(54) **VARIABLE GEOMETRY LIFT VALVE FOR RECIPROCATING COMPRESSORS**
HUBVENTIL MIT VARIABLER GEOMETRIE FÜR KOLBENVERDICHTER
SOUPAPE À GÉOMÉTRIE VARIABLE POUR COMPRESSEURS ALTERNATIFS

(30) Priority: 15.06.2017 IT 201700066770
(43) Date of publication of application: 19.12.2018
(73) Proprietor: General Electric Company, Schenectady, NY 12345 (US)
(72) Inventor: GALEOTTI, Leonardo, 50127 Florence (IT)
(74) Representative: BRP Renaud & Partner mbB Rechtsanwälte Patentanwälte Steuerberater

(56) References cited:
- EP-A1- 0 314 665
- US-A- 4 869 289
- US-A- 5 100 606
- US-A1- 2008 230 733
- US-A1- 2010 090 149
- US-A1- 2015 044 081

## Description

### TECHNICAL FIELD

The present disclosure relates to valves, such as ring or annular valves. The embodiments of the subject matter disclosed herein relate specifically to valves for reciprocating compressors.

### BACKGROUND

US 2008/0230733 A1 discloses an automatic suction and pressure valve having a valve seat, a valve stop and a sealing element that can move to and fro between the valve seat and the valve stop. A valve spring is arranged in a spring cup in the valve stop, the valve spring loading the sealing element against the valve seat. US 4 869 289A discloses a compressor valve.

Reciprocating compressors equipped with such valves can be employed in process applications including refineries, petro chemicals, fertilizers, refrigeration and air, as well as in the gas and oil industry, for gas re-injection, gas lift, pipeline gas transmission, gas storage and fuel gas bursting.

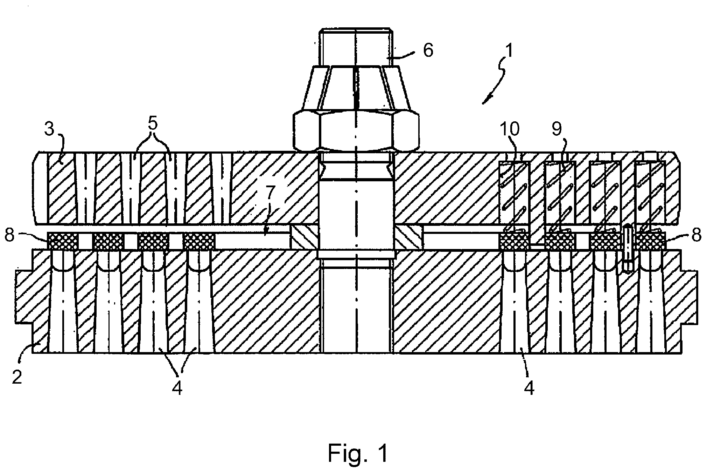

Valves are typically arranged on both the suction side as well as the discharge side of reciprocating compressors to automatically open and close the suction port and discharge port of the compressor under the control of the pressure inside the compressor cylinder. An example of a ring valve of the prior art is illustrated in Fig. 1. The valve 1 comprises a valve seat 2 and a valve guard 3. The valve seat is provided with circumferentially arranged gas flow passages 4 extending through the valve seat 2. The valve guard 3 is in turn provided with gas flow passages 5. A central screw 6 connects the valve seat 2 and the valve guard 3 to one another leaving a space 7 there between. A plurality of concentrically arranged sealing rings 8 are provided between the valve seat 2 and the guard valve 3. Each sealing ring 8 is arranged along a set of corresponding annularly arranged gas flow passages 4 of the valve seat 2. A plurality of compression springs 9 is provided for each sealing ring 8 to bias the sealing ring in a closed position, wherein the sealing ring 8 closes the respective set of gas passages 4 by sealingly contacting corresponding sealing surfaces of the gas flow passages 4. The compression springs 9 are housed in respective spring pockets 10 provided in the valve guard 3. Differential pressure across the valve 1 causes automatic opening and closing of the valve.

The resilient force of the springs 9 depends on the elastic coefficient of the springs and the displacements according to the well-known Hook law. That means that such force depends on the distance between the valve seat and the valve guard, i.e. on the gap between these components. In fact, if the gap, also called lift in the present disclosure, between the seat and the guard is increased, it is correspondingly decreased the compression of the spring and thus the biasing force. If the gap is decreased, the compression, and thus the force, is increased.

This means that the lift of the valve is a design parameter that should be properly calculated and designed for each operating condition of the valve. It is, however, rather uncommon that a single condition exists during an entire operative life of a reciprocating compressor. Normal usage generally involves multiple working conditions. This inevitably brings the lift value to be designed with a "best-fit" solution to accommodate multiple conditions with the result that none of such conditions is optimized. This poses the following additional problems:
Possible fluttering with low molecular weight gases or in particular conditions.

Energy wasted in each working condition due to a non-optimized lift design.

In case of nitrogen run, customer needs a dedicated set of valves.

Possible higher temperatures on discharge gas.

It would be thus desirable to design and provide a valve which overcomes the aforementioned drawbacks.

### BRIEF DESCRIPTION OF THE INVENTION

The present invention is defined in the accompanying claims.

According to first exemplary embodiments, a valve for reciprocating compressors is described. The valve is provided with a valve seat having first gas flow passages, a valve guard having second gas flow passages and at least one movable sealing element arranged between the valve guard and the valve seat. The sealing element is configured to move between a closed position in which the passage of fluid is prevented and an open position in which the passage of fluid is allowed, and it is biased by resilient members against the valve seat to close the first gas flow passages. The valve seat and the valve guard are relatively movable in order to define a variable gap or lift for the sealing element. An actuator is provided to adjust the relative position of the valve seat and the valve guard. This allows modifying the lift parameter to adapt the valve for different gases, pressures and running conditions. As a consequence, discharge temperatures are sensibly decreased with high percentages of energy saving (up to 25%) on high molecular weight gases with increased operability for reciprocating compressors.

In the simplest solution, an elastic element is interposed in such gap or lift. An actuator provides the correct relative position between the valve seat and the valve guard in order to vary the lift either manually or automatically. This variation in position leads to obtain valves optimized for each running condition with following positive effects:
avoiding fluttering effects,
keeping pulsations under control (with the possibility to have smaller pulsation vessels), no need of a dedicated set of valves for Nitrogen run,
high energy savings,
increased valve's operative life,
discharge gas temperatures sensibly decreased.

This upgrade solution can be applied on both discharge and suction valves at the same time and with the unloaders thus leading also to a high competitive solution and is applicable also in presence of normal pneumatic unloaders on suction valves.

According to second exemplary embodiments, there is a reciprocating compressor comprising a valve according to embodiments herein.

According to third exemplary embodiments, there is a method for operating a reciprocating compressor in a specific working condition by using a valve according to embodiments herein.

### BRIEF DESCRIPTION OF THE DRAWINGS

The following description of exemplary embodiments will become more apparent when considered in conjunction with the accompanying drawings wherein:
Figure 1 illustrates a cross section according to a longitudinal plane of an automatic ring valve of the current state of the art;
Figure 2 illustrates longitudinal cross section of the head of a current state of the art reciprocating compressor where valves according to exemplary embodiments herein can be used;
Figure 3 illustrates a cross section according to a longitudinal plane of an automatic ring valve with elastic elements (Belleville washers) between valve seat and valve guard;
Figure 4 illustrates the same valve of Figure 3 having helical springs as elastic members between the valve seat and the valve guard;
Figures 5 and 6 illustrate a cross section of a valve actuated through a rotating shaft. In this solution, the shaft moves the valve guard with its rotating movement. This leads to increase the lift dimension between valve seat and valve guard;
Figures 7 and 8 illustrate the same valves of Figures 5 and 6 actuated through a translational shaft;
Figures 9 and 10 illustrate an embodiment of a valve having an intermediate plate between the valve seat and the valve guard. The plate can be moved vertically and it acts like a stop for the rings, modifying the lift dimension;
Figure 11 illustrates another example of an automatic ring valve; and
Figures 12, 13, 14, 15, 16, 17 and 18 (hereinafter Figs. 12 -18) illustrate exemplary embodiments mainly differing for the type of actuator used for varying the lift between the valve seat and the valve guard.

### DETAILED DESCRIPTION OF THE INVENTION

The following description of exemplary embodiments refer to the accompanying drawings. The same reference numbers in different drawings identify the same or similar elements. The following detailed description does not limit the invention. Instead, the scope of the invention is defined by the appended claims.

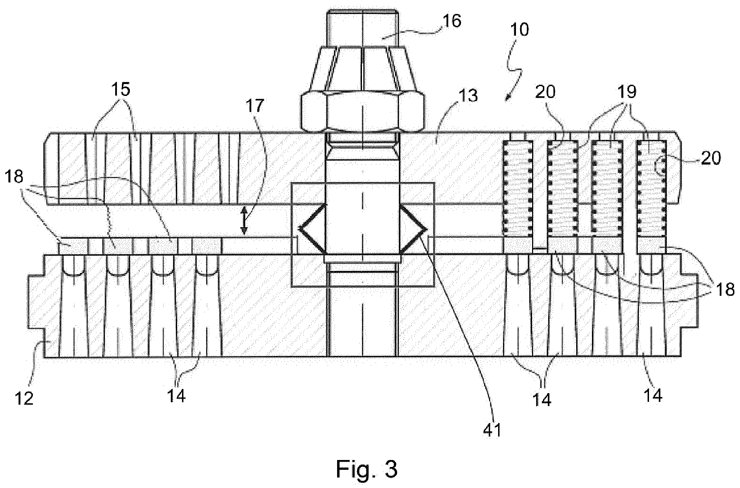

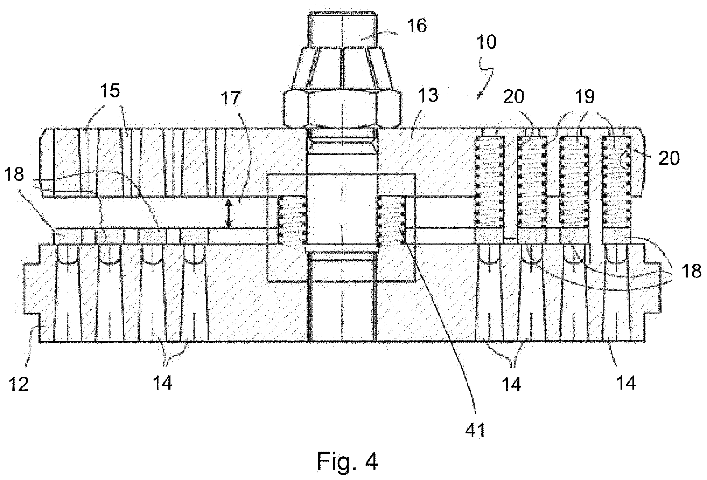

An example of an automatic ring valve is illustrated in Fig. 3 and 4. The automatic ring valve 10 comprises a valve seat 12 and a valve guard 13. The valve seat is provided with circumferentially arranged gas flow passages 14 extending through the valve seat 12. The valve guard 13 is in turn provided with gas flow passages 15. A central screw 16 connects the valve seat 12 and the valve guard 13 to one another with interposition of one or more elastic elements 41 like Belleville washers (Fig. 3) or springs (Fig. 4) leaving a variable space or lift 17 there between.

At least one shutter ring 18 is placed between the valve seat 12 and the valve guard 13. The shutter ring 18 is arranged along a corresponding gas flow passage 14 of the valve seat 12. When a plurality of annularly arranged gas flow passages 14 of the valve seat 12 are present, a plurality of concentrically arranged shutter rings 18 is placed between the valve seat 12 and the valve guard 13. A plurality of contrasting members for contrasting an opening movement of the shutter rings 18 are provided; as an example, these members consist of a plurality of resilient members, as compression springs 19, for each shutter ring 18 for biasing the shutter ring 18 in a closed position, wherein the shutter ring 18 closes the respective set of gas flow passages 14 by sealingly contacting corresponding sealing surfaces of the gas flow passages 14. The compression springs 19 are housed in respective spring pockets 20 provided in the valve guard 13.

Differential pressure across the valve 10 causes automatic opening and closing of the valve.

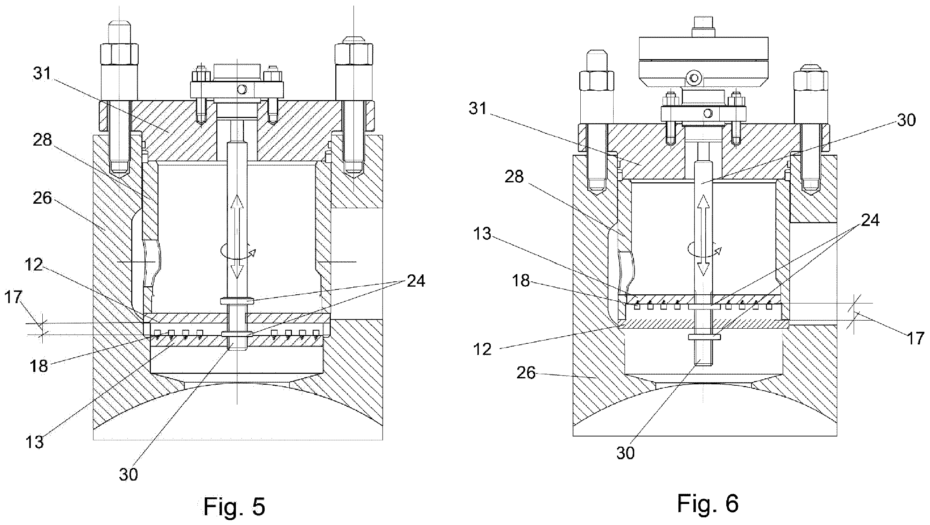

A further example is shown in Fig. 5 and 6. Here the valve is illustrated in mounting position with its cage 28 within a cylinder 26, particularly to act as a suction valve (on the left) and a discharge valve (on the right) of a reciprocating compressor. The difference between the two configurations is represented by the exchange in position of the valve seat 12 and the valve guard 13, also called in the present disclosure counter seat. The seat 12 is fixed to the cylinder 26, while the guard 13 is fixed to the shaft 30. The displacement of the shaft 30 allows for increasing or decreasing the lift 17 between valve seat 12 and valve guard 13. Stroke stops 24 are present to limit the excursion of the shaft 30 and thus set a limit range for the lift 17.

In the configuration of Fig. 5 and 6, the seat 12 has a threaded hole coupled to corresponding threads of the shaft 30 acting as a worm screw to convert rotation of the shaft in a translation movement.

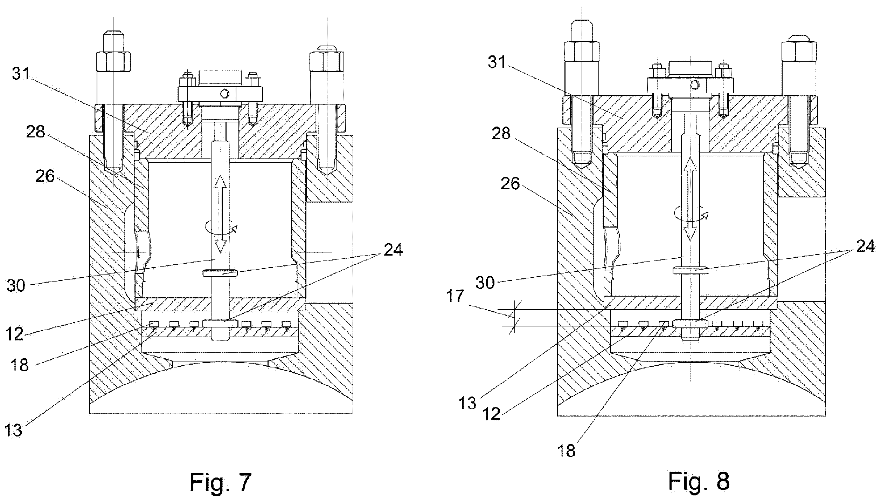

In the configuration of Fig. 7 and 8, the shaft 30 is directly actuated to translate without any cinematic conversion. In any case the result is a variable gap 17 between valve seat 12 and valve guard 13 that can be finely tuned controlling an actuator.

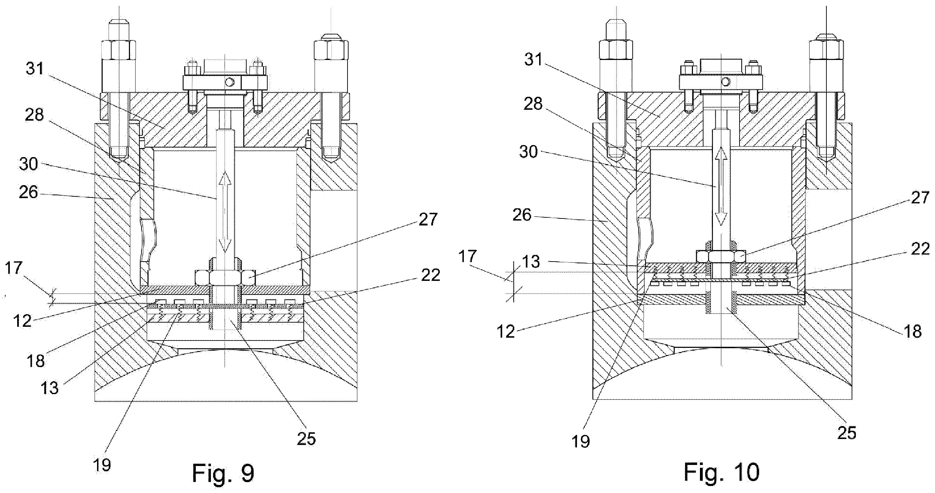

Fig. 9 and 10 show another example. Here a plate 22 between valve seat 12 and valve guard 13 is introduced. The valve assumes the configuration as disclosed in WO 2013/087615.

According to the subject matter disclosed herein, the plate 22 is removable such that it can be replaced, e.g. if the seat plate breaks or is worn. A plurality of contrasting members for contrasting an opening movement of the plate and thus of the sealing rings 18 are provided; as an example, these members consist of a plurality of resilient members, as compression springs 19.

In this configuration, the variable lift or gap 17 of the valve is formed between the plate 22 and the seat 12 with possible interposition of one or more elastic elements 41 like Belleville washers or springs.

The valve seat 12 is fixed to the cylinder 26 of the valve while the plate 22 is fixed to the shaft 30. The guard 13 is fixed and only the plate 22 can translate to vary the lift 17. Stroke stops 24 may be advantageously provided, for example, in the form of protrusions of the bolt 25 fixing the guard 13.

As in the configuration of Fig. 5, 6, 7 and 8, translation of the shaft 30 may be caused by its rotation due to a worm screw gear or to the direct action of a linear actuator or both.

More in general any type of coupling can be used as long as it is able to vary the distance between the seat and the counter seat or between the seat/counter seat and an element located between the seat and the counter seat like a plate. Not limiting examples include oil/air, single or multi piston actuators, electromagnetic, piezoelectric actuators, stepper motors or the like.

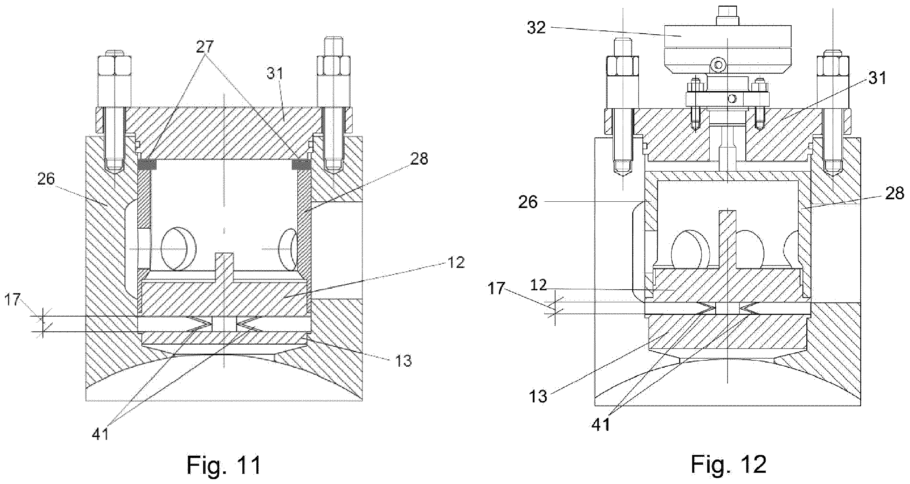

In the valves according to Figs. 11 - 18, the seat 12 is fixed to the valve cage 28 and the counter seat 13 is fixed to the cylinder 26 or viceversa. The gap 17 between the seat 12 and counter seat 13 can be trimmed by acting on the cage 28. The simplest way is by introducing shims 27 of variable size between cage 28 and cover 31 as shown in Fig. 11. More sophisticated solutions require the presence of an actuator 32 pushing on the cage 28 against the action of one or more contrasting members 41 located in the gap 17 between the seat 12 and the counter seat 13.

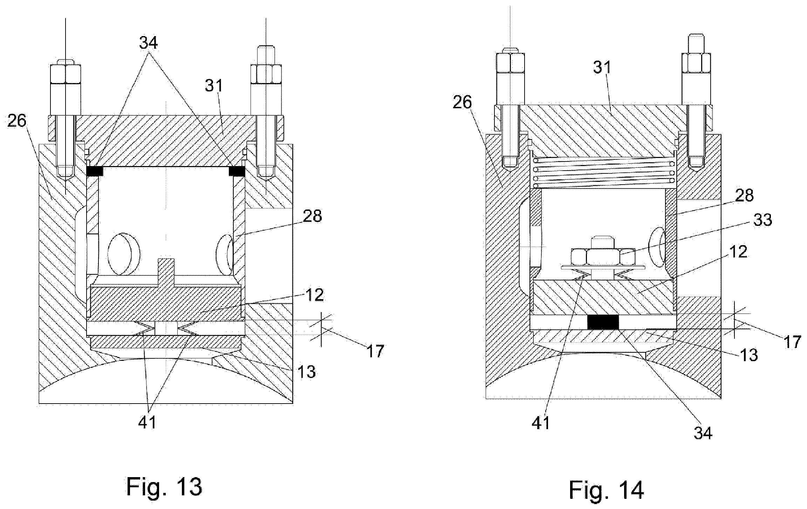

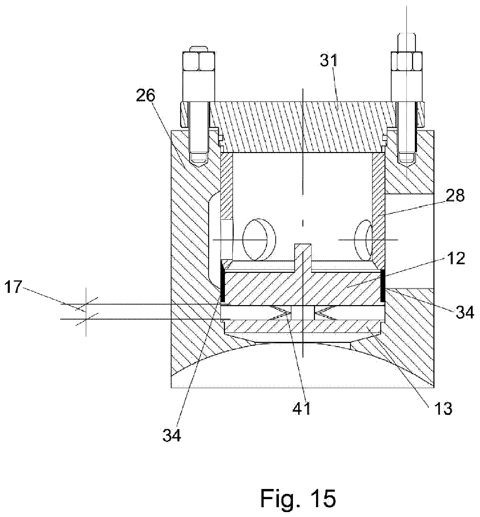

Also in this case different type of actuators can be used for the purpose. Fig. 12 shows a configuration with an oil/air actuator 32. In Figs. 13 - 15, a piezoelectric actuator 34 inside the gas chamber is used. This can be placed between the cage 28 and the cover 31 (Fig. 13), between the seat 12 and counter seat 13 with elastic elements 41 contrasting the movement located between the seat 12 or the counter seat 13 and a bolt 33 securing the seat 12 or counter seat 13 with the cylinder (Fig. 14) or between the cage 28 and the seat 12 or the counter seat 13 (Fig. 15).

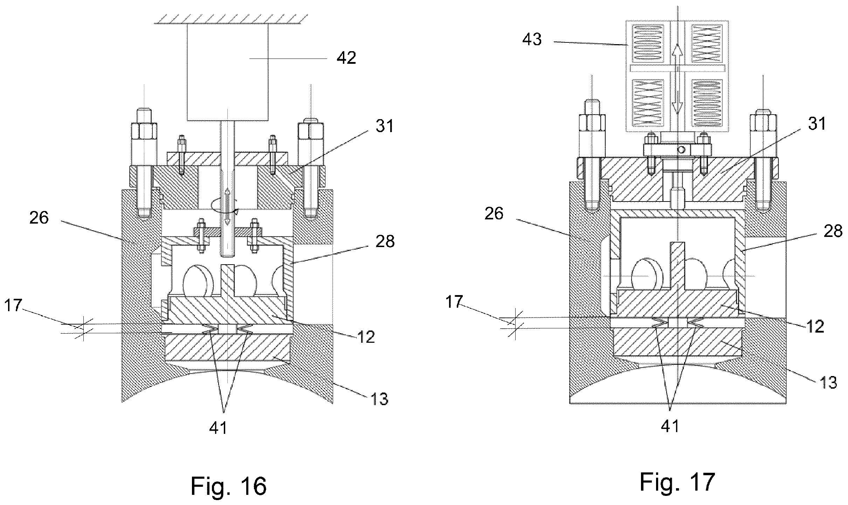

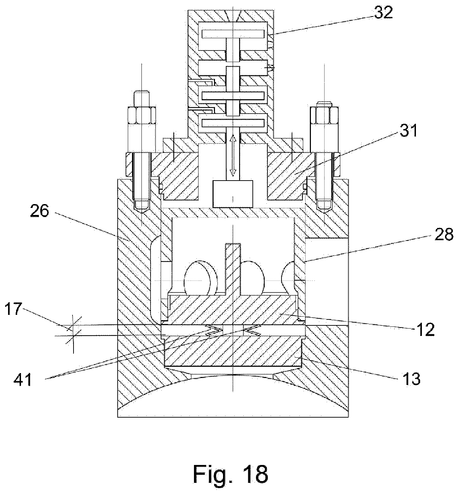

In the embodiment of Fig. 16 a stepper motor 42 acting on a screwjack linked to the valve cage is used. In Fig. 17 an electromagnetic actuator 43 is provided while in Fig. 18 a multi-piston configuration is shown.

Embodiments have been mainly illustrated with reference to ring valves, but the teachings herein can be easily extended also to other type of valves such as poppet valves as those disclosed, for example, in US patent n. 9,297,373.

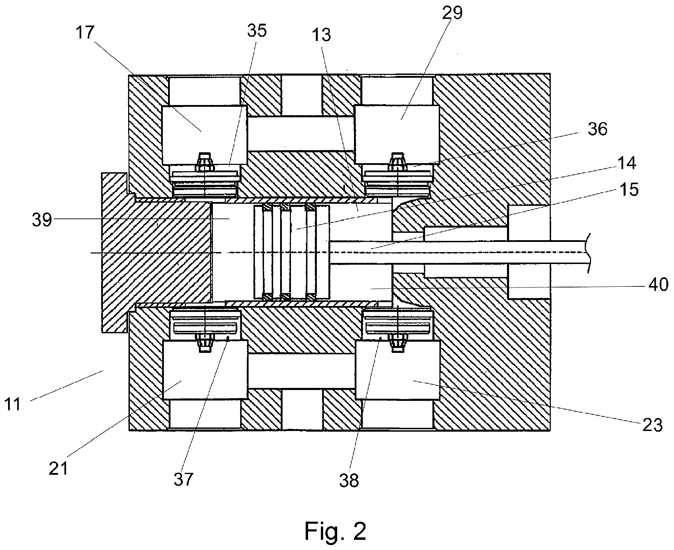

Fig. 2 illustrates the head 11 of a reciprocating compressor using four automatic ring valves 1. The valves are arranged on the suction ports and discharge ports of the compressor designated 35, 36, 37, 38.

More in detail, the compressor head 11 defines a compressor cylinder 13 wherein a piston 14 is reciprocatingly movable. A rod 15 of the piston 14 is connected to a crank (not shown), which reciprocatingly moves the piston 14.

The piston 14 divides the cylinder 13 into two separate compression chambers 39, 40. The compressor head 11 is provided with a first suction port 17 in fluid communication with the first compression chamber 39 through a first automatic ring valve 35. A second suction port 29 is in fluid communication with the second compression chamber 40 through a second automatic ring valve 36. A first discharge port 21 is in fluid communication with the first compression chamber 39 through a third automatic ring valve 37 and a second discharge port 23 is in fluid communication with the second compression chamber 40 through a fourth automatic ring valve 38.

The reciprocating motion of the piston 14 causes selectively suction of the gas in the first compression chamber 39 and discharge of compressed gas from the second compression chamber 40 and vice versa. The automatic ring valves 35, 36, 37 and 38 selectively open when the pressure in the first gas flow passages 4 exceeds the resilient force of the springs 19.

The present invention is also defined by the appended method claim 14.

## Claims

1. Valve for reciprocating compressors, the valve comprising:
- a valve seat (12) with first gas flow passages (14) extending through said valve seat (12);
- a valve guard (13) having second gas flow passages (15) extending through said valve guard (13);
- at least one shutter ring (18) arranged between said valve guard (13) and said valve seat (12), the shutter ring (18) being configured to move between a closed position in which the passage of fluid is prevented and an open position in which the passage of fluid is allowed,
wherein said at least one shutter ring (18) is resiliently biased by resilient members (19) against the valve seat (12) to close said first gas flow passages (14),
wherein the valve seat (12) and the valve guard (13) are relatively movable to define a variable gap or lift (17) for the shutter ring (18) and **characterized in that** the valve further comprises an actuator (32, 2. 34, 42, 43) to adjust the relative position of the valve seat (12) and the valve guard (13).

2. Valve according to claim 1, wherein one or more contrasting members (41) are provided, such as springs, Belleville washers or the like, such contrasting members (41) being located in the gap (17) between the seat (12) and the guard (13) or between the seat (12) or the guard (13) and a stationary part of the valve.

3. Valve according to any preceding claim, wherein the actuator (32) acts on a translating element (30), the valve guard (12) being coupled to such element (30) to translate to/from the valve seat (12).

4. Valve according to claim 3, further comprising stop members (24) to limit the excursion of the translating element (30) and thus set a range of values for the lift (17).

5. Valve according to claim 3 or 4, wherein the translating element (30) comprises a rotating shaft, the seat (12) having a threaded hole coupled to corresponding threads of the shaft to act as a worm screw to convert rotation of the shaft in a translation movement.

6. Valve according to any preceding claim, wherein the seat (12) or the guard (13) is coupled with a valve cage (28), the movement of the cage (28) causing the displacement of the valve seat (12) with respect to the valve guard (13) or vice versa.

7. Valve according to claim 6, wherein a calibration stop member (27) of a set of stop members is interposed between the cage (28) and a cover (31) or a static part of the valve to shim the position of the cage (28) with respect to the seat (12) or the guard (13).

8. Valve according to claim 6 or 7, wherein an actuator (32, 34) is provided to act on the cage (28) to relatively displace the valve seat (12) with respect to the valve guard (13).

9. Valve according to any preceding claim, wherein the actuator (32, 34) is selected from the group comprising: oil/air, single or multi piston, electromagnetic (43), piezoelectric actuators and stepper motors (42).

10. Valve according to any preceding claim, further comprising a plate (22) interposed between the valve seat (12) and the valve guard (13), wherein the at least one shutter ring (18) is resiliently biased by resilient members (19) against said removable plate (22) to close said first gas flow passages (14), the variable gap or lift (17) being formed between the plate (22) and the valve seat (12) with interposition of one or more elastic elements (41) such as Belleville washers, springs or the like.

11. A reciprocating compressor comprising a valve according to any of the preceding claims.

12. A reciprocating compressor according to claim 11, comprising a compressor head (11) defining a compressor cylinder (13) wherein a piston (14) is reciprocatingly movable, wherein the piston (14) divides the cylinder (13) into two separate compression chambers (39, 40), the compressor head (11) being provided with:
- a first suction port (17) in fluid communication with the first compression chamber (39) through a first automatic ring valve (35);
- a second suction port (29) in fluid communication with the second compression chamber (40) through a second automatic ring valve (36);
- a first discharge port (21) in fluid communication with the first compression chamber (39) through a third automatic ring valve (37); and
- a second discharge port (23) in fluid communication with the second compression chamber (40) through a fourth automatic ring valve (38),
wherein the reciprocating motion of the piston (14) causes selectively suction of the gas in the first compression chamber (39) and discharge of compressed gas from the second compression chamber (40) and vice versa, the automatic ring valves (35, 36, 37, 38) being configured to selectively open when the pressure in the first gas flow passages (4) exceeds the resilient force of the springs (19), wherein at least one of the automatic ring valves (35, 36, 37, 38) is a valve according to one or more of the preceding claims 1 to 10.

13. Compressor according to claim 11 or 12, further comprising a control unit configured to drive the actuator of the valves to trim the lift according to specific working condition.

14. Method for operating a reciprocating compressor in a specific working condition, the compressor comprising a cylinder, a piston sliding in said cylinder, a suction duct with a suction valve and a discharge duct with a discharge valve, each valve comprising a valve seat (12) and a valve guard (13) relatively movable, at least one shutter (18), at least one biasing member (19) configured to bias the shutter (18) towards a closing position, and an actuator (32, 34, 42, 43) to adjust the relative position of the valve seat (12) and the guard (13); the method comprising:
- varying the mutual position of the valve seat (12) and the valve guard (13) with the actuator (32, 34, 42, 43) to set a gap (17) between the valve and the seat (12) optimized for the working condition of the compressor;
- reciprocatingly moving the piston in the cylinder to suck a gas in the cylinder at a suction pressure and discharge the gas from the cylinder at a discharge pressure;
- selectively opening and closing the suction valve and the discharge valve by differential pressure across the valves.

## Patentansprüche

1. Ventil für Kolbenverdichter, wobei das Ventil umfasst:
- einen Ventilsitz (12) mit ersten Gasströmungskanälen (14), die sich durch den Ventilsitz (12) erstrecken;
- einen Ventilschutz (13) mit zweiten Gasströmungskanälen (15), die sich durch den Ventilschutz (13) erstrecken;
- mindestens einen Verschlussring (18), der zwischen dem Ventilschutz (13) und dem Ventilsitz (12) angeordnet ist, wobei der Verschlussring (18) dafür konfiguriert ist, um zwischen einer geschlossenen Position, in der ein Durchgang von Fluid verhindert wird, und einer offenen Position, in der ein Durchgang von Fluid zugelassen wird, bewegt zu werden,
wobei der mindestens eine Verschlussring (18) durch elastische Elemente (19) elastisch gegen den Ventilsitz (12) vorgespannt ist, um die ersten Gasströmungskanäle (14) zu schließen,
wobei der Ventilsitz (12) und der Ventilschutz (13) in Bezug zueinander beweglich sind, um einen variablen Spalt oder Hub (17) für den Verschlussring (18) zu definieren, und **dadurch gekennzeichnet, dass** das Ventil ferner ein Betätigungselement (32, 34, 42, 43) umfasst, um die Position in Bezug zueinander des Ventilsitzes (12) und des Ventilschutzes (13) einzustellen.

2. Ventil nach Anspruch 1, wobei ein oder mehrere kontrastierende Elemente (41) bereitgestellt sind, wie Federn, Tellerfedern oder dergleichen, wobei sich diese kontrastierenden Elemente (41) in dem Spalt (17) zwischen dem Sitz (12) und dem Schutz (13) oder zwischen dem Sitz (12) oder dem Schutz (13) und einem stationären Teil des Ventils befinden.

3. Ventil nach einem der vorstehenden Ansprüche, wobei das Betätigungselement (32) auf ein Übertragungselement (30) wirkt, wobei der Ventilschutz (12) mit einem solchen Element (30) gekoppelt ist, um zu/von dem Ventilsitz (12) übertragen zu werden.

4. Ventil nach Anspruch 3, ferner umfassend Anschlagelemente (24), um die Auslenkung des Übertragungselements (30) zu begrenzen und somit einen Wertebereich für den Hub (17) einzustellen.

5. Ventil nach Anspruch 3 oder 4, wobei das Übertragungselement (30) eine Drehwelle umfasst, wobei der Sitz (12) ein Gewindeloch aufweist, das mit entsprechenden Gewinden der Welle gekoppelt ist, um als Schneckenschraube zu wirken und die Drehung der Welle in eine Übertragungsbewegung umzuwandeln.

6. Ventil nach einem der vorstehenden Ansprüche, wobei der Sitz (12) oder der Schutz (13) mit einem Ventilkorb (28) gekoppelt ist, wobei die Bewegung des Korbs (28) die Verschiebung des Ventilsitzes (12) in Bezug auf den Ventilschutz (13) bewirkt oder umgekehrt.

7. Ventil nach Anspruch 6, wobei ein Kalibrierungsanschlagelement (27) eines Satzes von Anschlagelementen zwischen dem Korb (28) und einem Deckel (31) oder einem statischen Teil des Ventils dafür angeordnet ist, um die Position des Korbs (28) in Bezug auf den Sitz (12) oder den Schutz (13) anzupassen.

8. Ventil nach Anspruch 6 oder 7, wobei ein Betätigungselement (32, 34) bereitgestellt ist, um auf den Korb (28) einzuwirken, um den Ventilsitz (12) hinsichtlich des Ventilfängers (13) in Bezug zueinander zu verschieben.

9. Ventil nach einem der vorstehenden Ansprüche, wobei das Betätigungselement (32, 34) ausgewählt ist aus der Gruppe umfassend: Öl/Luft, Ein- oder Mehrkolben, elektromagnetisch (43), piezoelektrische Betätigungselemente und Schrittmotoren (42).

10. Ventil nach einem der vorstehenden Ansprüche, ferner umfassend eine Platte (22), die zwischen dem Ventilsitz (12) und dem Ventilwächter (13) angeordnet ist, wobei der mindestens eine Verschlussring (18) durch elastische Elemente (19) elastisch gegen die entfernbare Platte (22) vorgespannt ist, um die ersten Gasströmungskanäle (14) zu schließen, wobei der variable Spalt oder Hub (17) zwischen der Platte (22) und dem Ventilsitz (12) unter Zwischenschaltung eines oder mehrerer elastischer Elemente (41) wie Tellerfedern, Federn oder dergleichen gebildet ist.

11. Kolbenverdichter, umfassend ein Ventil nach einem der vorstehenden Ansprüche.

12. Kolbenverdichter nach Anspruch 11, umfassend einen Verdichterkopf (11), der einen Verdichterzylinder (13) definiert, wobei ein Kolben (14) hin- und herbewegbar ist, wobei der Kolben (14) den Zylinder (13) in zwei separate Verdichtungskammern (39, 40) unterteilt, wobei der Verdichterkopf (11) versehen ist mit:
- einem ersten Sauganschluss (17) in Fluidverbindung mit der ersten Kompressionskammer (39) durch ein erstes automatisches Ringventil (35);
- einem zweiten Sauganschluss (29) in Fluidverbindung mit der zweiten Kompressionskammer (40) durch ein zweites automatisches Ringventil (36);
- einer ersten Auslassöffnung (21) in Fluidverbindung mit der ersten Kompressionskammer (39) durch ein drittes automatisches Ringventil (37); und
- einer zweiten Auslassöffnung (23) in Fluidverbindung mit der zweiten Kompressionskammer (40) durch ein viertes automatisches Ringventil (38),
wobei die Hin- und Herbewegung des Kolbens (14) ein selektives Ansaugen des Gases in der ersten Kompressionskammer (39) und ein Ablassen von komprimiertem Gas aus der zweiten Kompressionskammer (40) und umgekehrt bewirkt, wobei die automatischen Ringventile (35, 36, 37, 38) dafür konfiguriert sind, sich selektiv zu öffnen, wenn der Druck in den ersten Gasströmungskanälen (4) die Federkraft der Federn (19) übersteigt, wobei mindestens eines der automatischen Ringventile (35, 36, 37, 38) ein Ventil nach einem oder mehreren der vorstehenden Ansprüche 1 bis 10 ist.

13. Verdichter nach Anspruch 11 oder 12, ferner umfassend eine Steuereinheit, die dafür konfiguriert ist, um das Betätigungselement der Ventile anzusteuern, um den Hub gemäß einer bestimmten Arbeitsbedingung abzustimmen.

14. Verfahren zum Betreiben eines Kolbenverdichters in einem bestimmten Betriebszustand, wobei der Verdichter einen Zylinder, einen in dem Zylinder gleitenden Kolben, einen Saugkanal mit einem Saugventil und einen Druckkanal mit einem Druckventil umfasst, wobei jedes Ventil einen Ventilsitz (12) und einen Ventilschutz (13) umfasst, die in Bezug zueinander beweglich sind, mindestens einen Verschluss (18), mindestens ein Vorspannelement (19), das dafür konfiguriert ist, um den Verschluss (18) in Richtung einer Schließposition vorzuspannen, und ein Betätigungselement (32, 34, 42, 43), um die Position des Ventilsitzes (12) und des Schutzes (13) in Bezug zueinander einzustellen; wobei das Verfahren umfasst:
- Variieren der gegenseitigen Position des Ventilsitzes (12) und des Ventilschutzes (13) mit dem Betätigungselement (32, 34, 42, 43), um einen Spalt (17) zwischen dem Ventil und dem Sitz (12) einzustellen, der für den Betriebszustand des Verdichters optimiert ist;
- hin- und hergehendes Bewegen des Kolbens in dem Zylinder, um ein Gas in dem Zylinder bei einem Saugdruck anzusaugen und das Gas aus dem Zylinder bei einem Abgabedruck abzugeben;
- selektives Öffnen und Schließen des Ansaugventils und des Auslassventils durch Differenzdruck über die Ventile.

## Revendications

1. Soupape pour compresseurs alternatifs, la soupape comprenant :
- un siège de soupape (12) avec des premiers passages d'écoulement de gaz (14) s'étendant à travers ledit siège de soupape (12) ;
- un arrêt de soupape (13) ayant des deuxièmes passages d'écoulement de gaz (15) s'étendant à travers ledit arrêt de soupape (13) ;
- au moins un anneau obturateur (18) agencé entre ledit arrêt de soupape (13) et ledit siège de soupape (12), l'anneau obturateur (18) étant configuré pour se déplacer entre une position fermée dans laquelle le passage de fluide est empêché et une position ouverte dans laquelle le passage de fluide est autorisé,
dans laquelle ledit au moins un anneau obturateur (18) est élastiquement sollicité par des éléments élastiques (19) contre le siège de soupape (12) pour fermer lesdits premiers passages d'écoulement de gaz (14),
dans laquelle le siège de soupape (12) et l'arrêt de soupape (13) peuvent se déplacer l'un par rapport à l'autre pour définir un écartement ou une levée variable (17) pour l'anneau obturateur (18) et **caractérisée en ce que** la soupape comprend en outre un actionneur (32, 34, 42, 43) pour ajuster la position relative du siège de soupape (12) et de l'arrêt de soupape (13).

2. Soupape selon la revendication 1, dans laquelle un ou plusieurs éléments de contraste (41) sont fournis, tels que des ressorts, des rondelles Belleville ou similaires, de tels éléments de contraste (41) se situant dans l'écartement (17) entre le siège (12) et l'arrêt (13) ou entre le logement (12) ou l'arrêt (13) et une partie fixe de la soupape.

3. Soupape selon une quelconque revendication précédente, dans laquelle l'actionneur (32) agit sur un élément de translation (30), l'arrêt de soupape (12) étant couplé à un tel élément (30) pour se déplacer par translation vers le/à partir du siège de soupape (12).

4. Soupape selon la revendication 3, comprenant en outre des éléments de butée (24) afin de limiter la course de l'élément de translation (30) et ainsi établir une plage de valeurs pour la levée (17).

5. Soupape selon la revendication 3 ou 4, dans laquelle l'élément de translation (30) comprend un arbre rotatif, le siège (12) ayant un trou taraudé couplé à des filetages correspondants de l'arbre pour jouer le rôle de vis sans fin pour convertir une rotation de l'arbre en un mouvement de translation.

6. Soupape selon une quelconque revendication précédente, dans laquelle le siège (12) ou l'arrêt (13) est couplé à une cage de soupape (28), le mouvement de la cage (28) provoquant le déplacement du siège de soupape (12) par rapport à l'arrêt de soupape (13) ou inversement.

7. Soupape selon la revendication 6, dans laquelle un élément de butée d'étalonnage (27) d'un ensemble d'éléments de butée est interposé entre la cage (28) et un couvercle (31) ou une partie statique de la soupape pour compenser la position de la cage (28) par rapport au siège (12) ou à l'arrêt (13).

8. Soupape selon la revendication 6 ou 7, dans laquelle un actionneur (32, 34) est fourni pour agir sur la cage (28) pour déplacer relativement le siège de soupape (12) par rapport à l'arrêt de soupape (13).

9. Soupape selon une quelconque revendication précédente, dans laquelle l'actionneur (32, 34) est choisi dans le groupe comprenant : actionneurs à huile/air, à piston unique ou multiple, électromagnétique (43), piézoélectrique et moteurs pas-à-pas (42).

10. Soupape selon une quelconque revendication précédente, comprenant en outre une plaque (22) interposée entre le siège de soupape (12) et l'arrêt de soupape (13), dans laquelle l'au moins un anneau obturateur (18) est élastiquement sollicité par des éléments élastiques (19) contre ladite plaque amovible (22) pour fermer lesdits premiers passages d'écoulement de gaz (14), l'écartement ou la levée variable (17) étant formé entre la plaque (22) et le siège de soupape (12) avec l'interposition d'un ou plusieurs éléments élastiques (41) tels que des rondelles Belleville, des ressorts ou similaires.

11. Compresseur alternatif comprenant une soupape selon l'une quelconque des revendications précédentes.

12. Compresseur alternatif selon la revendication 11, comprenant une tête de compresseur (11) définissant un cylindre de compresseur (13) dans lequel un piston (14) peut être animé d'un mouvement alternatif, dans lequel le piston (14) divise le cylindre (13) en deux chambres de compression indépendantes (39, 40), la tête de compresseur (11) étant pourvue de :
- un premier orifice d'aspiration (17) en communication fluidique avec la première chambre de compression (39) par l'intermédiaire d'une première soupape annulaire automatique (35) ;
- un deuxième orifice d'aspiration (29) en communication fluidique avec la deuxième chambre de compression (40) par l'intermédiaire d'une deuxième soupape annulaire automatique (36) ;
- un premier orifice de refoulement (21) en communication fluidique avec la première chambre de compression (39) par l'intermédiaire d'une troisième soupape annulaire automatique (37) ; et
- un deuxième orifice de refoulement (23) en communication fluidique avec la deuxième chambre de compression (40) par l'intermédiaire d'une quatrième soupape annulaire automatique (38),
dans lequel le mouvement alternatif du piston (14) amène sélectivement une aspiration du gaz dans la première chambre de compression (39) et un refoulement de gaz comprimé à partir de la deuxième chambre de compression (40) et inversement, les soupapes annulaires automatiques (35, 36, 37, 38) étant configurées pour s'ouvrir sélectivement lorsque la pression dans les premiers passages d'écoulement de gaz (4) dépasse la force élastique des ressorts (19), dans lequel au moins l'une des soupapes annulaires automatiques (35, 36, 37, 38) est une soupape selon l'une ou plusieurs des revendications précédentes 1 à 10.

13. Compresseur selon la revendication 11 ou 12, comprenant en outre une unité de commande configurée pour entraîner l'actionneur de soupape pour compenser la levée selon une condition spécifique de travail.

14. Procédé de fonctionnement d'un compresseur alternatif dans une condition spécifique de travail, le compresseur comprenant un cylindre, un piston coulissant dans ledit cylindre, un conduit d'aspiration avec une soupape d'aspiration et un conduit de refoulement avec une soupape de refoulement, chaque soupape comprenant un siège de soupape (12) et un arrêt de soupape (13) mobiles l'un par rapport à l'autre, au moins un obturateur (18), au moins un élément de sollicitation (19) configuré pour solliciter l'obturateur (18) vers une position de fermeture, et un actionneur (32, 34, 42, 43) pour ajuster la position relative du siège de soupape (12) et de l'arrêt (13) ; le procédé comprenant :
- la variation de la position réciproque du siège de soupape (12) et de l'arrêt de soupape (13) avec l'actionneur (32, 34, 42, 43) pour définir un écartement (17) entre la soupape et le siège (12) optimisé pour la condition de travail du compresseur ;
- le déplacement alternatif du piston dans le cylindre pour aspirer un gaz dans le cylindre à une pression d'aspiration et le refoulement du gaz à partir du cylindre à une pression de refoulement ;
- l'ouverture et la fermeture sélectives de la soupape d'aspiration et de la soupape de refoulement par pression différentielle à travers les soupapes.
